# EUROPEAN PATENT APPLICATION

(11) **EP 4 672 107 A1**
(43) Date of publication of application: **31.12.2025**
(21) Application number: 23924230.8
(22) Date of filing: 15.12.2023
(51) Int. Cl.: G06Q 10/0637

(54) **POLICY DETERMINATION METHOD, POLICY DETERMINATION PROGRAM, AND POLICY DETERMINATION DEVICE**

(30) Priority: 22.02.2023 JP 2023025922
(71) Applicant: FUJITSU LIMITED, Kawasaki-shi, Kanagawa 211-8588 (JP)
(72) Inventor: ITO, Toshio, Kawasaki-shi, Kanagawa 211-8588 (JP)
(74) Representative: Hoffmann Eitle
(86) International application number: PCT/JP2023/045093
(87) International publication number: WO 2024/176586

(57) **Abstract**

[PROBLEM] An object is to provide a measurement determination method, a measure determination program, and a measure determination device that allow a measure with high convergence to be selected.

[SOLUTION TO PROBLEM] A measure determination method is a method implemented by a computer executing a process including: generating stakeholder-specific graphs representing a distribution of relative goodness for a plurality of measures individually evaluated by a plurality of stakeholders, generating a predetermined graph obtained by combining the stakeholder-specific graphs, and determining a recommended measure from the plurality of measures based on the predetermined graph.

## Description

### [TECHNICAL FIELD]

The present disclosure relates to a measure determination method, a measure determination program, and a measure determination device.

### [BACKGROUND ART]

A technique for assisting consensus building on proposed measures in consideration of opinions of participating users has been known. In this technique, consensus building on proposed measures is assisted by using a numerical value range related to an evaluation index set by each of users for each of a plurality of evaluation indices for evaluating proposed measures (see, for example, Patent Literature 1).

### [CITATION LIST]

### [PATENT LITERATURE]

[PTL 1]
Japanese Patent Application Laid-Open No. 2021-170187

### [SUMMARY OF THE INVENTION]

### [TECHNICAL PROBLEM]

In the techniques described above, the numerical range related to the evaluation index is set by the user. However, the users do not always have sufficient expertise to evaluate various measures such as proposed measures. This may result in setting of a numerical range that is not appropriate for consensus building. For example, if an inappropriate numerical range is set for consensus building, it may be difficult to build a consensus on the measure in consideration of opinions of participating users.

When it is difficult to build a consensus on a measure, it is assumed that, for example, a consultant having sufficient expertise in evaluating measures is entrusted with determination of goodness or badness of a plurality of measures. Some consultants, for example, may be entrusted by stakeholders, that are interested parties in the business, to make judgments about the goodness or badness of the plurality of measures. In such cases, the consultant narrows down a plurality of measures based on his/her own knowledge and terminal operations. Specifically, the consultant selects some of the measures that have high convergence among stakeholders from among several measures and propose them to the stakeholders.

However, depending on the measure selected and proposed by the consultant, the selection of the measure may be qualitative rather than quantitative. As a result, consensus building may not be established among stakeholders. In this case, the consultant will operate the terminal again to re-propose the measure, but the increased operation time may increase the processing load and power consumption of the terminal. Therefore, it is preferable to let the stakeholders themselves select a measure with high convergence rather than the consultant.

Therefore, an object of one aspect is to provide a measure determination method, a measure determination program, and a measure determination device to allow a measure with high convergence to be selected.

### [SOLUTION TO PROBLEM]

In one embodiment, a measure determination method is a method implemented by a computer executing a process including: generating stakeholder-specific graphs representing a distribution of relative goodness for a plurality of measures individually evaluated by a plurality of stakeholders, generating a predetermined graph obtained by combining the stakeholder-specific graphs, and determining a recommended measure from the plurality of measures based on the predetermined graph.

### [ADVANTAGEOUS EFFECTS OF INVENTION]

A measure with high convergence can be selected.

### [BRIEF DESCRIPTION OF THE DRAWINGS]

[FIG. 1]
   Illustrated is an example of a measure determination system.
[FIG. 2]
   Illustrated is an example of a hardware configuration of a measure determination server.
[FIG. 3]
   Illustrated is an example of a functional configuration of the measure determination server.
[FIG. 4]
   (a) illustrates an initial deployment number setting list. (b) illustrates an OD (Origin Destination) table.
[FIG. 5]
   Illustrated is an example of a measure that maps the initial deployment numbers to the evaluation results of indices.
[FIG. 6]
   (a) illustrates a first example of an individual distribution graph. (b) illustrates a second example of the individual distribution graph. (c) illustrates a third example of the individual distribution graph.
[FIG. 7]
   Presented is a flowchart illustrating an example of a graph generation process executed by the measure determination server.
[FIG. 8]
   Illustrated is an example of a relative evaluation dashboard.
[FIG. 9]
   Presented is a flowchart illustrating an example of the measure determination process executed by the measure determination server.
[FIG. 10]
   (a) is a diagram for describing an example of generating a combined distribution graph from individual distribution graphs. (b) illustrates recommended measures and an example of output thereof.

### [DESCRIPTION OF EMBODIMENTS]

Hereinafter, embodiments for carrying out the present disclosure will be described with reference to the drawings.

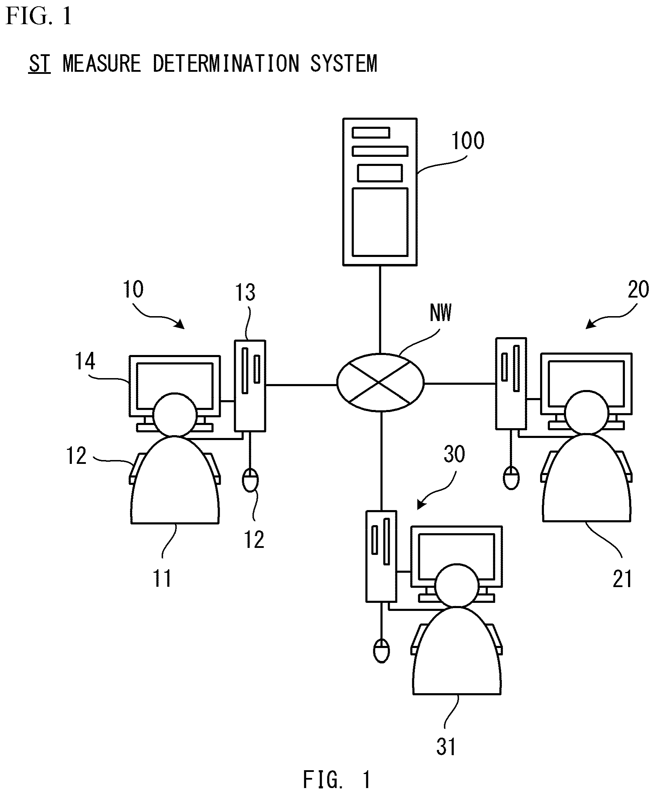

As illustrated in FIG. 1, a measure determination system ST is a computer system that includes terminal devices 10, 20, and 30 and a measure determination server 100. The terminal devices 10, 20, and 30 and the measure determination server 100 are connected over a communication network NW. The communication network NW includes either or both of a LAN (Local Area Network) and the Internet. In FIG. 1, a PC (Personal Computer) is illustrated as an example of the terminal devices 10, 20, and 30. However, the terminal devices 10, 20, and 30 may be smart terminals such as smartphones or tablet terminals. In FIG. 1, a physical server device is illustrated as an example of the measure determination server 100. However, the measure determination server 100 may be a virtual server device.

The measure determination system ST is used by stakeholders 11, 21, and 31. For example, the stakeholder 11 operates an input device 12 included in the terminal device 10 to access the measure determination server 100, thereby using the measure determination system ST. The stakeholders 21 and 31 are similar to the stakeholder 11, and therefore, a detailed description thereof is omitted. The stakeholders 11, 21, and 31 are independent stakeholders who have conflicting interests in a single project.

For example, a business operator plans a project called shared e-scooters as a part of a service for residents. In this project, a plurality of e-scooters are deployed at each of a plurality of stations located throughout the town. An e-scooter is sometimes called an electric scooter. The e-scooters will be shared by the residents of the town. This allows the resident to rent the e-scooter at the nearest station for a fee. The resident can also drop off or return the e-scooter at any station.

In the case of such a project, e-scooters are deployed early in the morning (or late at night) at each of the plurality of stations. For example, a truck carrying e-scooters tours each station, and the truck crew deploys the e-scooters at each station. Here, the costs incurred by the business operator and the income earned by the business operator vary depending on the number of e-scooters initially deployed at the stations. The cost includes, for example, the fuel cost for the trucks carrying the e-scooters and the labor cost for the crews. The income includes, for example, rental fees (lending fees) for the e-scooters. In addition, the e-scooters emit CO₂ (carbon dioxide), and the deployment of a large number of e-scooters will increase CO₂ emissions. The increase in CO₂ emissions causes environmental problems such as global warming.

From this perspective, the business operator requests the stakeholders 11, 21, and 31 belonging to independent departments having conflicting interests to examine the initial deployment numbers. For example, the stakeholder 11 is a staff member belonging to the environmental enhancement department. The stakeholder 11 is required by the business operator to reduce CO₂ and contribute to the local community and environment, regardless of costs and income. The stakeholder 21 is a staff member belonging to the business planning department. The stakeholder 21 is required by the business operator to improve the income regardless of CO₂ emissions and costs. The stakeholder 31 is a staff member belonging to the operation management department. The stakeholder 31 is required by the business operator to reduce costs regardless of CO₂ emissions and income. Thus, the stakeholders 11, 21, and 31 are required by the business operator to examine the initial deployment numbers having conflicting interests.

When requested by the business operator to examine the initial deployment numbers, the stakeholders 11, 21, and 31 individually perform various operations on the terminal devices 10, 20, and 30, respectively. For example, when the stakeholder 11 operates the input device 12 of the terminal device 10 to input various setting information to be set in the measure determination server 100, a control device 13 of the terminal device 10 sends the input setting information to the measure determination server 100. The setting information includes the number of e-scooters initially deployed at each station. The initial deployment numbers included in the setting information are divided into several patterns.

As described in detail below, when the measure determination server 100 receives the setting information, it evaluates (or estimates) the CO₂ emissions, the income earned by the business operator, and the costs incurred by the business operator based on the initial deployment number of each station as a plurality of indices. When the measure determination server 100 evaluates the plurality of indices, it outputs a measure evaluation screen (hereafter referred to as a relative evaluation dashboard) including the initial deployment numbers and the evaluation results to the terminal devices 10, 20, and 30. For example, the measure determination server 100 displays the relative evaluation dashboard on a display device 14.

The relative evaluation dashboard includes a measure (e.g., measure A) that includes a first pattern of the initial deployment numbers and the evaluation results of the first pattern, and another measure (e.g., measure B) that includes a second pattern of the initial deployment numbers and the evaluation results of the second pattern. The stakeholders 11, 21, and 31 each review the relative evaluation dashboard and evaluate which of the two measures is better from their respective standpoints. When the measures have been evaluated, the measure determination server 100 displays a relative evaluation dashboard that includes either of these two measures and another measure (e.g., measure C) that differs from these two measures and requests the stakeholders 11, 21, and 31 to perform the evaluation in the same manner.

The measure determination server 100 repeats such a process, and when the relative evaluation of all measures is completed, the measure determination server 100 determines recommended measures from among a plurality of measures based on the evaluation from the respective standpoints of the stakeholders 11, 21, and 31. When the measure determination server 100 determines recommended measures, it outputs (specifically, displays) the determined recommended measures on, for example, the display device 14 of the terminal device 10.

As described above, the measure determination server 100 allows the stakeholders 11, 21, and 31 to select measures with high convergence. This allows the stakeholders 11, 21, and 31 to avoid leaving the decision of whether a plurality of measures are good or bad to a consultant with sufficient expertise in evaluating measures. Therefore, terminal operations for re-proposing measures by the consultant are avoided, thereby eliminating operation time and reducing the increase in processing load and power consumption of the terminal.

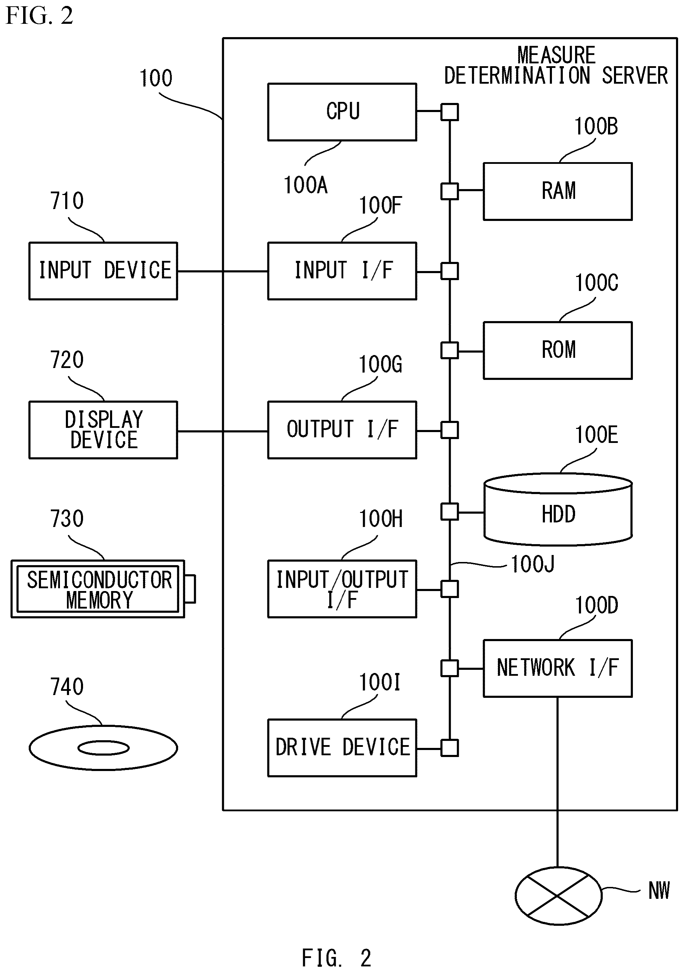

Next, a hardware configuration of the measure determination server 100 is described with reference to FIG. 2. The terminal devices 10, 20, and 30 described above have basically the same hardware configuration as the hardware configuration of the measure determination server 100, and thus detailed description thereof is omitted.

The measure determination server 100 includes a CPU (Central Processing Unit) 100A as a processor, and a RAM (Random Access Memory) 100B and a ROM (Read Only Memory) 100C as a memory. The measure determination server 100 includes a network I/F (interface) 100D and an HDD (Hard Disk Drive) 100E. An SSD (Solid State Drive) may be used instead of the HDD (Hard Disk Drive) 100E.

The measure determination server 100 may include at least one of an input I/F 100F, an output I/F 100G, an input/output I/F 100H, and a drive device 100I as necessary. The CPU 100A to the drive device 100I are connected to each other by an internal bus 100J. That is, the measure determination server 100 can be realized by a computer.

An input device 710 is connected to the input I/F 100F. Examples of the input device 710 include a keyboard, a mouse, and a touch panel. A display device 720 is connected to the output I/F 100G. The display device 720 is, for example, a liquid crystal display. A semiconductor memory 730 is connected to the input/output I/F 100H. Examples of the semiconductor memory 730 include a USB (Universal Serial Bus) memory and a flash memory. The input/output I/F 100H reads the measure determination program stored in the semiconductor memory 730. The input I/F 100F and the input/output I/F 100H include USB ports, for example. The output I/F 100G has a display port, for example.

A portable recording medium 740 is inserted into the drive device 100I. Examples of the portable recording medium 740 include removable disks such as a CD (Compact Disc)-ROM and a DVD (Digital Versatile Disc). The drive device 100I reads the measure determination program recorded in the portable recording medium 740. The network I/F 100D has, for example, a LAN port and a communication circuit. The communication circuit includes either or both of a wired communication circuit and a wireless communication circuit. The network I/F 100D is connected to the communication network NW.

The measure determination program stored in at least one of the ROM 100C, the HDD 100E, or the semiconductor memory 730 is temporarily stored in the RAM 100B by the CPU 100A. The measure determination program recorded in the portable recording medium 740 is temporarily stored in the RAM 100B by the CPU 100A. The CPU 100A executes the stored measure determination program, whereby the CPU 100A implements various functions described later and executes a measure determination method including various processes described later. The measure determination program may be one according to the flowchart described below.

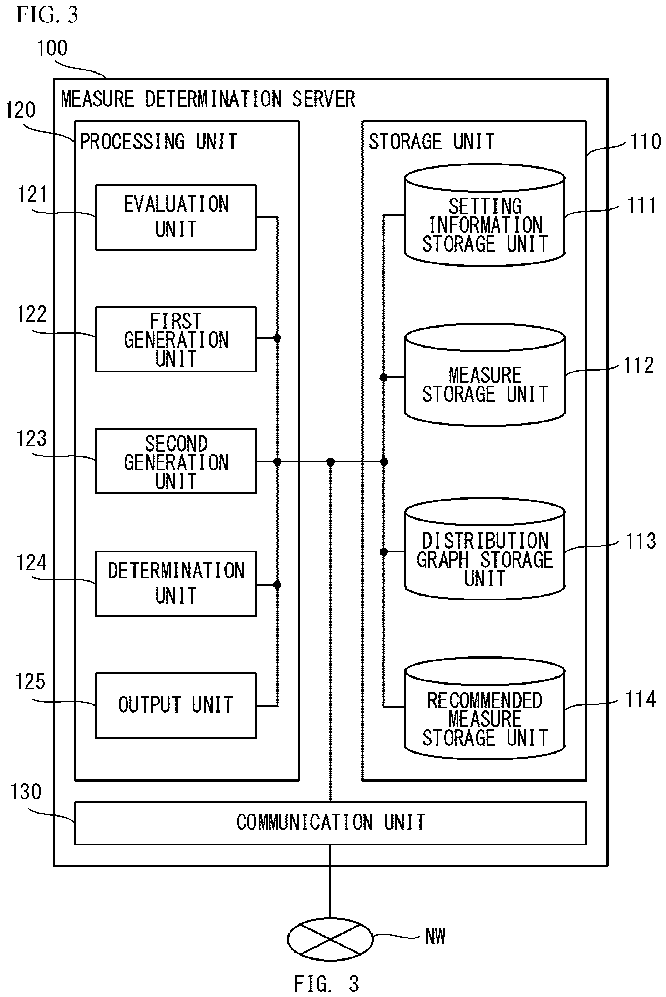

Referring to FIG. 3 to FIG. 6, the functional configuration of the measure determination server 100 is described. The main part of the functions of the measure determination server 100 is illustrated in FIG. 3.

As illustrated in FIG. 3, the measure determination server 100 includes a storage unit 110, a processing unit 120, and a communication unit 130. The storage unit 110 can be implemented by either or both of the RAM 100B and the HDD 100E described above. The processing unit 120 can be implemented by the CPU 100A described above. The communication unit 130 can be implemented by the network I/F 100D described above.

The storage unit 110, the processing unit 120, and the communication unit 130 are connected to each other. The storage unit 110 includes a setting information storage unit 111, a measure storage unit 112, a distribution graph storage unit 113, and a recommended measure storage unit 114. The storage unit 110 stores various data by using the setting information storage unit 111, the measure storage unit 112, the distribution graph storage unit 113, and the recommended measure storage unit 114. The processing unit 120 includes an evaluation unit 121, a first generation unit 122, a second generation unit 123, a determination unit 124, and an output unit 125. The processing unit 120 uses the evaluation unit 121, the first generation unit 122, the second generation unit 123, the determination unit 124, and the output unit 125 to process various data.

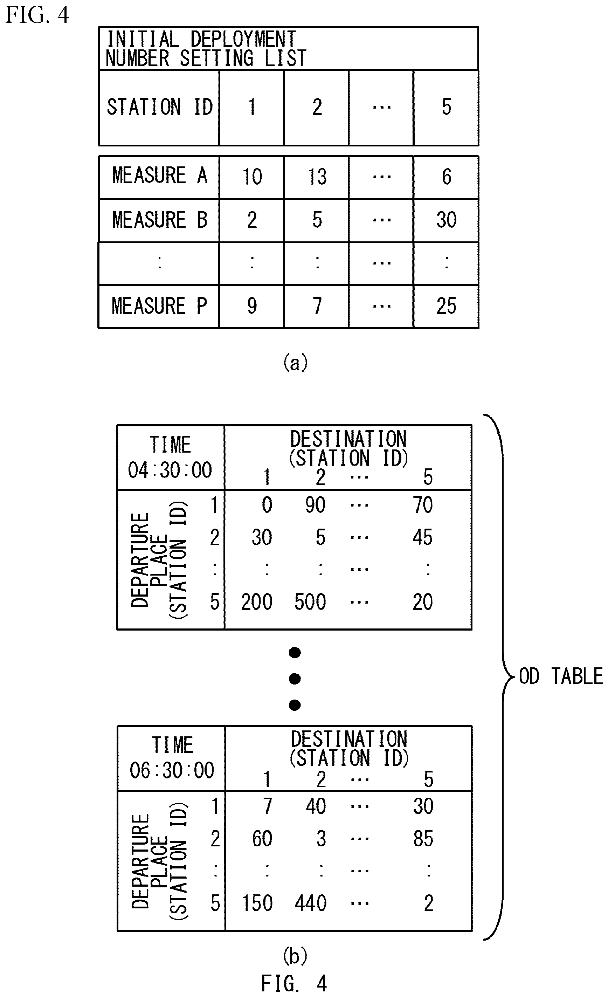

The setting information storage unit 111 stores setting information to be set in the measure determination server 100. The setting information includes an initial deployment number setting list, as illustrated in FIG. 4(a). The initial deployment number setting list contains multiple patterns (e.g., a measure A, a measure B, etc.) regarding the station-specific initial deployment numbers. The setting information also includes an OD table, as illustrated in FIG. 4(b). The OD table indicates the travel demand of the e-scooter at each time of day, with one point being a departure station of the e-scooter and the other point being a destination station. The setting information is stored in advance in the setting information storage unit 111, for example, by the administrator managing the measure determination server 100. The setting information may be stored in the setting information storage unit 111 by operation of the stakeholders 11, 21, and 31.

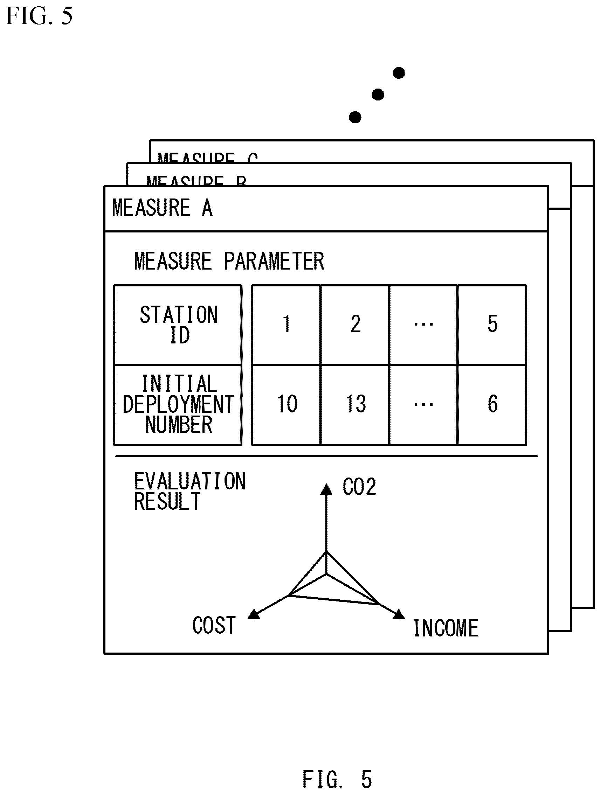

The measure storage unit 112 stores a plurality of measures including the results of the evaluation of indices by the evaluation unit 121. As illustrated in FIG. 5, each measure, such as a measure A, a measure B, and a measure C, includes the station-specific initial deployment numbers, which are the source of the evaluation results. For example, the measure A includes a first pattern of the station-specific initial deployment numbers and the evaluation results of the indices in the first pattern in association with each other. According to the first pattern of the station-specific initial deployment numbers, both the CO₂ emissions and the costs are relatively low compared to the income. Therefore, it is likely that the measure will be determined to be a measure for which consensus-building is established among the stakeholders 11, 21, and 31. In this manner, the measure storage unit 112 stores a plurality of measures in which the station-specific initial deployment numbers and the results of the evaluation of the indices are associated with each other.

The distribution graph storage unit 113 stores individual distribution graphs corresponding to the respective stakeholders 11, 21, and 31. The distribution graph storage unit 113 may or may not store a combined distribution graph obtained by combining the individual distribution graphs. The individual distribution graph is an example of a stakeholder-specific graph, and the combined distribution graph is an example of a predetermined graph. The individual distribution graph is a graph of a distribution representing relative goodness for a plurality of measures individually evaluated by the stakeholders 11, 21, and 31.

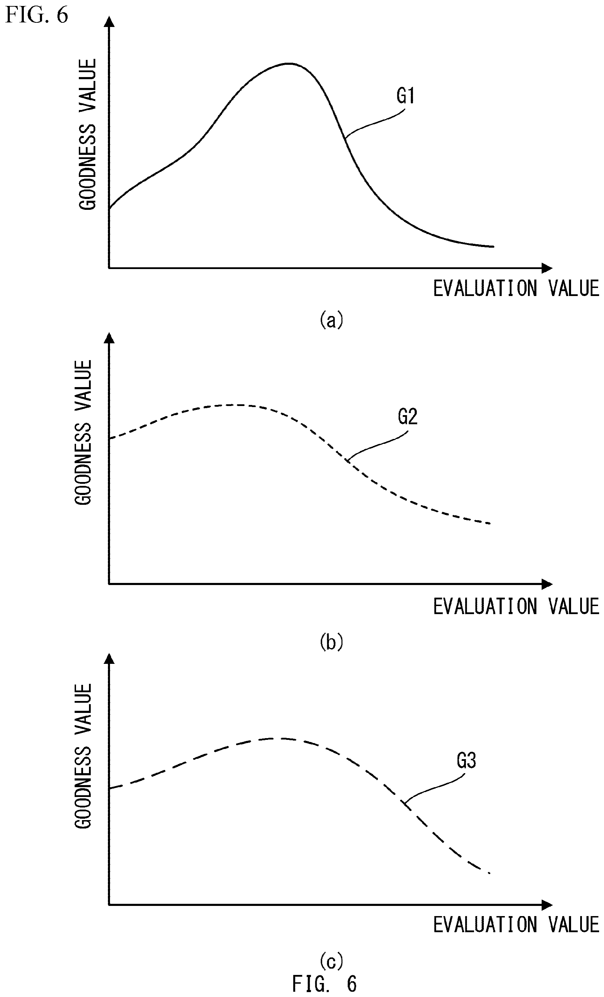

For example, as illustrated in FIG. 6(a), the distribution graph storage unit 113 stores an individual distribution graph G1. The individual distribution graph G1 is a graph of the distribution representing relative goodness for a plurality of measures evaluated by the stakeholder 11. As illustrated in FIG. 6(b), the distribution graph storage unit 113 stores an individual distribution graph G2. The individual distribution graph G2 is a graph of the distribution representing relative goodness for a plurality of measures evaluated by the stakeholder 21. Furthermore, as illustrated in FIG. 6(c), the distribution graph storage unit 113 stores an individual distribution graph G3. The individual distribution graph G3 is a graph of the distribution representing relative goodness for a plurality of measures evaluated by the stakeholder 31. The distribution graph storage unit 113 may store a combined distribution graph generated based on multiplication of the individual distribution graphs G1, G2, and G3. The coordinate plane on which the individual distribution graphs G1, G2, and G3 are drawn is represented by first and second coordinate axes that are orthogonal to each other. As described in detail below, the first coordinate axis represents a one-dimensional evaluation value, and the second axis represents a Goodness value.

The recommended measure storage unit 114 stores the recommended measure determined by the determination unit 124 from among a plurality of measures based on the combined distribution graph. In other words, the recommended measure storage unit 114 stores at least one measure of the plurality of measures stored in the measure storage unit 112 described above. The recommended measure storage unit 114 stores a plurality of measures such as a measure A, a measure N, and a measure P. The recommended measures are stored in the recommended measure storage unit 114 by the determination unit 124.

The evaluation unit 121 includes a traffic simulator such as SUMO (Simulation of Urban MObility). The traffic simulator simulates (imitates) the daily movements of people walking in an area or town and vehicles traveling in the area or town. E-scooters may be included in vehicles traveling in the area or town.

The evaluation unit 121 acquires the initial deployment number setting list and the OD table (see FIG. 4(a) and (b)) stored as the setting information in the setting information storage unit 111. When the evaluation unit 121 acquires the initial deployment number setting list and the OD table, it inputs them into the traffic simulator to simulate the movement of e-scooters and evaluates the indices for each pattern of the initial deployment numbers. In the present embodiment, the evaluation unit 121 evaluates three indices, i.e., the CO₂ emissions, the cost incurred by the business operator, and the income earned by the business operator. When the evaluation unit 121 finishes evaluating the indices, it generates a measure that includes the pattern of the initial deployment numbers and the evaluation values of the three indices in that pattern as evaluation results, with respect to each pattern. The evaluation unit 121 stores the generated multiple measures in the measure storage unit 112. Thereby, the measure storage unit 112 stores a plurality of measures.

The first generation unit 122 acquires the evaluation results of the indices included in the plurality of measures from the measure storage unit 112, and generates the individual distribution graphs G1, G2, and G3 (see FIGs. 6(a) to (c)) based on the acquired evaluation results. More specifically, the first generation unit 122 generates the individual distribution graphs G1, G2, and G3 based on the relative evaluation results by the stakeholders 11, 21, and 31 with respect to the evaluation results of the indices and a known spatial analysis method. For example, the first generation unit 122 extracts two measures from the measure storage unit 112, and requests each of the stakeholders 11, 21, and 31 to evaluate which of the two extracted measures is relatively better. When the first generation unit 122 acquires the relative evaluation results by the stakeholders 11, 21, and 31, the first generation unit 122 calculates a Goodness value that quantifies the relative goodness for the measure based on the relative evaluation result, a plurality of constraint conditions, and the least squares method. The plurality of constraint conditions include, for example, a condition regarding constraints of the score and a condition for determining whether the Goodness value is continuous.

After calculating a plurality of Goodness values, the first generation unit 122 interpolates the Goodness values based on a known interpolation function such as RBF (Radial Basis Function) interpolation to generate a heat-map Goodness distribution. After generating the Goodness distribution, the first generation unit 122 calculates a one-dimensional evaluation value by multiplying the evaluation values of the three indices by each other. After calculating the one-dimensional evaluation value, the first generation unit 122 separately draws the individual distribution graphs G1, G2, and G3, which represent the Goodness distribution as a two-dimensional graph, on the coordinate plane with the one-dimensional evaluation value as the first coordinate axis described above and the Goodness value as the second coordinate axis described above. After drawing the individual distribution graphs G1, G2, and G3 on the coordinate plane, the first generation unit 122 stores each of the individual distribution graphs G1, G2, and G3 together with the coordinate plane in the distribution graph storage unit 113. Thus, the distribution graph storage unit 113 stores the individual distribution graphs G1, G2, and G3.

For the known spatial analysis methods, for example, the following literature 1, 2, and 3 can be referred to.

Literature 1: Yuki Koyama, Daisuke Sakamoto, and Takeo Igarashi. "Crowd-powered parameter analysis for visual design exploration", UIST, (2014), Proceedings of the 27th annual ACM symposium on User interface software and technology. ACM, New York, NY, USA, 65-74.

Literature 2: Yuki Koyama, Daisuke Sakamoto, and Takeo Igarashi. "Crowd-powered parameter analysis for visual design exploration", SIGGRAPH, (2015), ACM SIGGRAPH 2015 Posters. ACM, New York, NY, USA, Article No.:2, Pages 1.

Literature 3: Yuki Koyama, Daisuke Sakamoto, and Takeo Igarashi, "Visual Design Exploration with Crowd-Powered Parameter Analysis", WISS (Workshop on Interactive Systems and Software), Computer Software, February 2016, Volume 33, No. 1, p. 63-77.

The second generation unit 123 generates a combined distribution graph obtained by combining the individual distribution graphs. For example, the second generation unit 123 obtains the individual distribution graphs G1, G2, and G3 from the distribution graph storage unit 113. The second generation unit 123 then generates a combined distribution graph based on the multiplication of the acquired individual distribution graphs G1, G2, and G3. The second generation unit 123 may or may not store the combined distribution graph in the distribution graph storage unit 113.

When generating the combined distribution graph, the second generation unit 123 may assign weights according to the power relationship (power balance) among the stakeholders 11, 21, and 31 to the individual distribution graphs G1, G2, and G3, and generate the combined distribution graph based on the weighted individual distribution graphs G1, G2, and G3. This allows consensus building to be established according to the power relationship among the stakeholders 11, 21, and 31.

For example, the second generation unit 123 assigns a first weight "1.0" to the individual distribution graph G1 as a weight. The second generation unit 123 assigns a second weight "0.5" to the individual distribution graph G2 as a weight. The second generation unit 123 assigns a third weight "0.3" to the individual distribution graph G3 as a weight. As described above, the second generation unit 123 assigns different weights according to the power relationship among the stakeholders 11, 21, and 31 to the individual distribution graphs G1, G2, and G3. This allows the measure determination server 100 to allow the stakeholders 11, 21, and 31 to select measures whose priorities for the project are CO₂ emissions reduction, income increase, and cost reduction, in that order. In other words, cost is not a priority, environment is given first priority, and income is given second priority.

The determination unit 124 determines the recommended measures from among multiple measures based on the combined distribution graph. In more detail, the determination unit 124 acquires the combined distribution graph from the distribution graph storage unit 113 or the second generation unit 123, and compares the predetermined threshold value with a recommendation value described below located on the combined distribution graph. The determination unit 124 determines the measure corresponding to the specific recommendation value that is equal to or greater than the predetermined threshold value as a recommended measure as a result of the comparison. After determining the recommended measure, the determination unit 124 stores the determined recommended measure in the recommended measure storage unit 114. Thus, the recommended measure storage unit 114 stores the recommended measure.

The predetermined threshold value is a numerical value that defines whether a recommendation is possible or not, the degree of recommendation, or the like. The measure determination server 100 can recommend measures corresponding to the recommendation values equal to or greater than the predetermined threshold value to the stakeholders 11, 21, and 31. Since measures corresponding to recommendation values equal to or greater than the predetermined threshold value are more likely to establish consensus building, the recommendation value may be referred to as a consensus-building value. On the other hand, the measure determination server 100 cannot recommend measures corresponding to recommendation values less than the predetermined threshold to the stakeholders 11, 21, and 31, and those measures are buried. As described above, the measure determination server 100 can determine quantitative, rather than qualitative, measures.

The output unit 125 acquires the recommended measures stored in the recommended measure storage unit 114 and outputs the acquired recommended measures to the display device 14 via the communication unit 130. Similarly, the output unit 125 outputs the recommended measures to the respective display devices of the terminal devices 20 and 30. This allows, for example, the stakeholder 11 to check, through the display device 14, the recommended measures that are highly likely to establish consensus building.

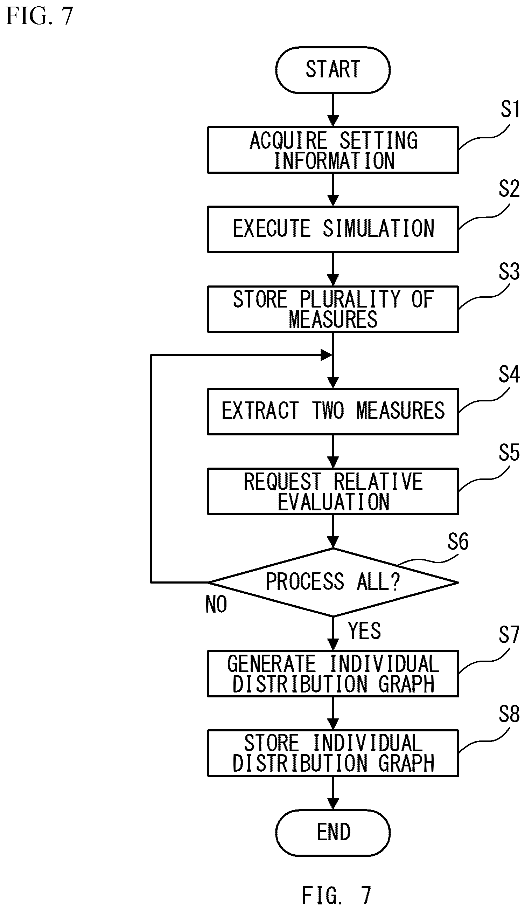

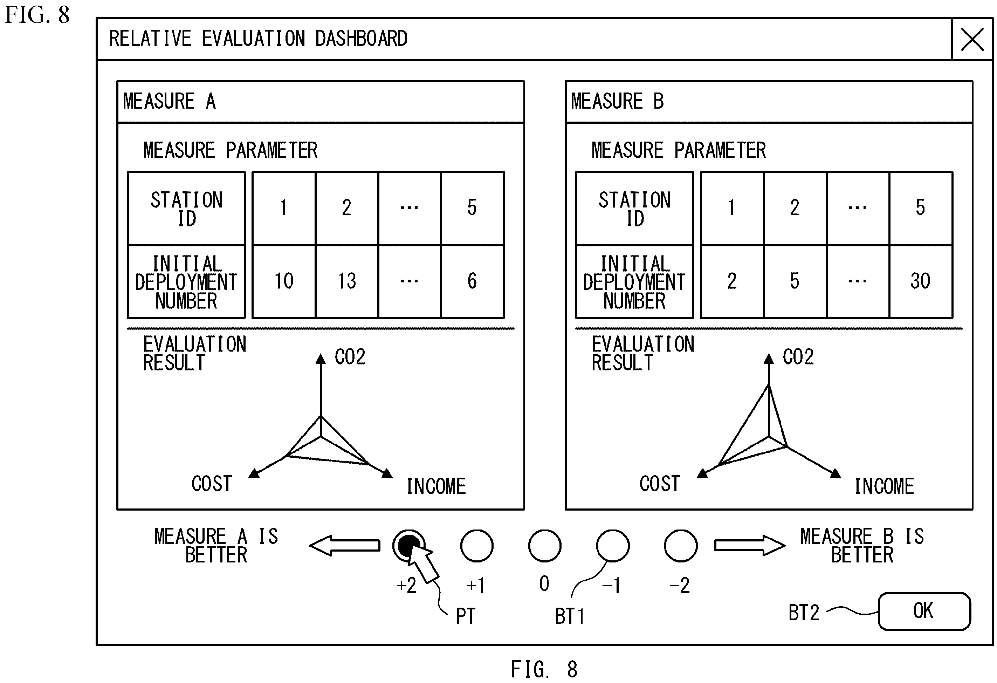

Next, referring to FIG. 7 and FIG. 8, a graph generation process executed by the measure determination server 100 will be described. The graph generation process is executed for each of the stakeholders 11, 21, and 31 as a unit. In the present embodiment, the stakeholder 11 will be described as an example. The stakeholders 21 and 31 are the same as the stakeholder 11, and therefore, detailed description thereof is omitted.

First, as illustrated in FIG. 7, the evaluation unit 121 acquires setting information (step S1). More specifically, the evaluation unit 121 acquires the initial deployment number setting list and the OD table (see FIG. 4(a) and (b)) described as the setting information by the setting information storage unit 111. When the setting information is acquired, the evaluation unit 121 executes the simulation (step S2). More specifically, the evaluation unit 121 inputs the initial deployment number setting list and the OD table to the traffic simulator implemented in itself, executes the simulation, and evaluates the indices. The traffic simulator outputs evaluation results for various patterns of initial deployment numbers. Therefore, the evaluation unit 121 generates a measure that maps this evaluation result to the station-specific initial deployment numbers for each pattern of the initial deployment numbers.

When the simulation is executed, the evaluation unit 121 stores a plurality of measures in the measure storage unit 112 (step S3). Thus, the measure storage unit 112 stores a plurality of measures (see FIG. 5). When the plurality of measures are stored, the first generation unit 122 extracts two measures (step S4). For example, the first generation unit 122 extracts the measures A and B from the plurality of measures stored in the measure storage unit 112.

When the two measures are extracted, the first generation unit 122 requests a relative evaluation (step S5). For example, the first generation unit 122 outputs a relative evaluation dashboard including the extracted measures A and B and a plurality of radio buttons BT1 to the display device 14, as illustrated in FIG. 8. The first generation unit 122 then requests the stakeholder 11 to evaluate which of the measures A and B is relatively better. In FIG. 8, five radio buttons BT1 are illustrated as an example. However, the number of the radio buttons BT1 may be an odd number such as three or seven, or an even number such as four or six.

Scores from minus two points to plus two points are set in advance at equal intervals as relative evaluation for the respective radio buttons BT1. Therefore, a zero point is set at the center of the radio buttons BT1. In this form, a positive score is set when the measure A placed on the left side of the screen in the relative evaluation dashboard is better. A negative score is set when the measure B placed on the right side of the screen in the relative evaluation dashboard is better. The positive and negative score settings may be reversed. In this manner, the arrangement of the measures in the screen is associated with the scores.

The stakeholder 11 relatively evaluates the goodness of the measure A and the measure B from the standpoint of the stakeholder 11 while watching the radar chart of the evaluation result. The stakeholder 11 then operates the input device 12 to move the mouse pointer PT, selects one of the radio buttons BT1, and presses a predetermined button BT2. This causes the first generation unit 122 to acquire the score set for the selected radio button BT1 as the evaluation result. In this manner, the first generation unit 122 acquires the relative goodness based on the input to the input device 12 by the stakeholder 11.

When the evaluation result is acquired, the first generation unit 122 determines whether all have been processed (step S6). For example, when no combination of measures other than the combination of the measures A and B has been extracted from the plurality of measures, the first generation unit 122 determines that all have not been processed (step S6: NO). In this case, the first generation unit 122 repeats the processes of steps S4 and S5. Thus, the first generation unit 122 acquires various relative evaluation results by the stakeholder 11 for the plurality of measures.

On the other hand, when all combinations of measures have been extracted, the first generation unit 122 determines that all have been processed (step S6: YES). In this case, the first generation unit 122 generates the individual distribution graph (step S7). For example, the first generation unit 122 generates the individual distribution graph G1 based on the various relative evaluation results by the stakeholder 11 and the spatial analysis method described above (see FIG. 6(a)). When the individual distribution graph is generated, the first generation unit 122 stores the individual distribution graph in the distribution graph storage unit 113 (step S8) and ends the graph generation process.

As described above, in the present embodiment, the stakeholder 11 has been described as an example, but the same applies to the stakeholders 21 and 31 as to the stakeholder 11. Therefore, the first generation unit 122 generates the individual distribution graph G2 (see FIG. 6(b)) based on various relative evaluation results by the stakeholder 21 and the spatial analysis method, and stores the individual distribution graph G2 in the distribution graph storage unit 113. The first generation unit 122 generates the individual distribution graph G3 (see FIG. 6(c)) based on the various relative evaluation results by the stakeholder 31 and the spatial analysis method, and stores the individual distribution graph G3 in the distribution graph storage unit 113.

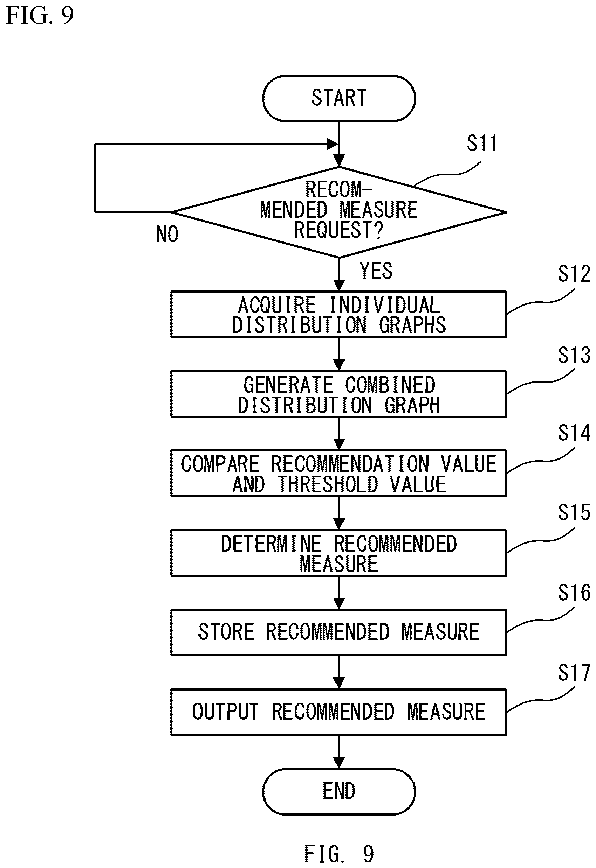

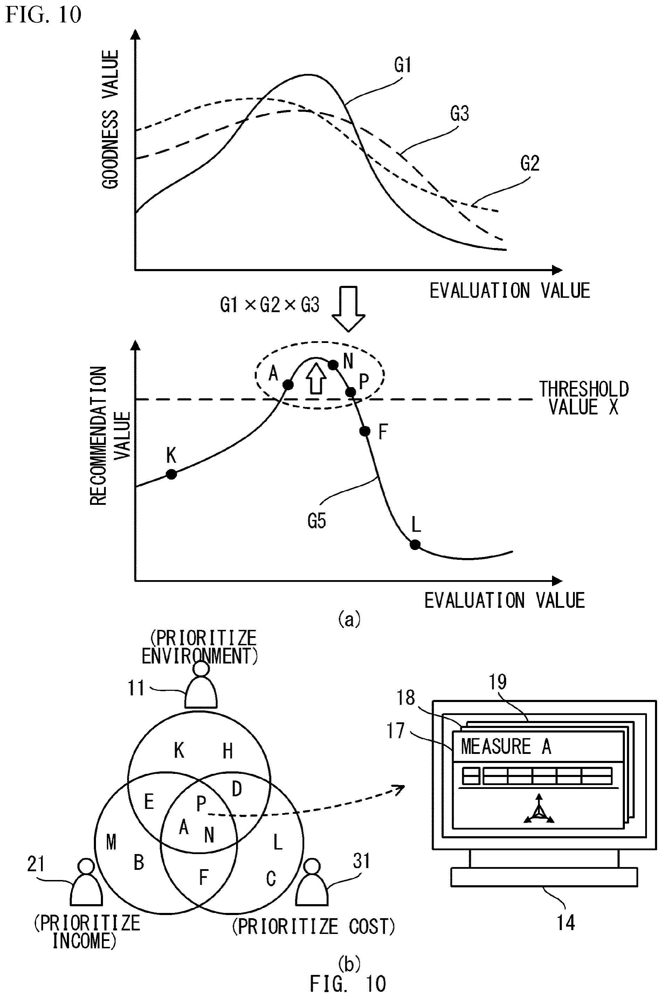

Next, referring to FIG. 9 and FIG. 10, a measure determination process executed by the measure determination server 100 is described. The measure determination process is executed based on the request from the stakeholder 11. However, the measure determination process may be performed based on the request from the stakeholder 21. The measure determination process may also be performed based on the request from the stakeholder 31. In the present embodiment, the stakeholder 11 will be described as an example. The stakeholders 21 and 31 are the same as in the case of the stakeholder 11, and therefore, detailed description thereof will be omitted.

First, as illustrated in FIG. 9, the second generation unit 123 waits until a recommended measure request is detected (step S11: NO). When the recommended measure request is detected (step S11: YES), the second generation unit 123 acquires the individual distribution graphs (step S12). For example, when the stakeholder 11 performs a predetermined operation to request the presentation of a recommended measure to the input device 12, the control device 13 transmits the recommended measure request to the measure determination server 100. This causes the second generation unit 123 to detect the recommended measure request and acquire the individual distribution graphs G1, G2, and G3 (see FIG. 6(a) to (c)).

When the individual distribution graphs are acquired, the second generation unit 123 generates a combined distribution graph (step S13). For example, when the individual distribution graphs G1, G2, and G3 are acquired, the second generation unit 123 generates a combined distribution graph G5 based on multiplication among the individual distribution graphs G1, G2, and G3, as illustrated in FIG. 10(a). The coordinate plane in which the combined distribution graph G5 is drawn is represented by third and fourth coordinate axes that are orthogonal to each other. The third coordinate axis represents the one-dimensional evaluation value, and the fourth axis represents the recommendation value. The recommendation value is the result of multiplication of the Goodness values and corresponds to the degree of possibility that consensus building is established. In other words, the recommendation value corresponds to the height of the preferred measure for any of the stakeholders 11, 21, and 31.

When the combined distribution graph is generated, the determination unit 124 compares the recommendation value with a threshold value (step S14) to determine the recommended measure (step S15). For example, as illustrated in FIG 10(a), when the combined distribution graph G5 is generated, the determination unit 124 compares the recommendation value located on the combined distribution graph G5 with a threshold value X. The determination unit 124 then determines measures A, N, and P corresponding to the specific recommendation values that are equal to or greater than the threshold value X as the recommended measures.

When the recommended measure is determined, the determination unit 124 stores the determined recommended measure in the recommended measure storage unit 114 (step S16). This causes the recommended measure storage unit 114 to store the recommended measure. Therefore, when the measures A, N, and P are determined as recommended measures, the recommended measure storage unit 114 stores the measures A, N, and P as recommended measures, as illustrated in the Venn diagram of FIG. 10(b). The measures A, N, and P correspond to measures that are more appropriate for all of the stakeholder 11 that prioritizes environment, the stakeholder 21 that prioritizes income, and the stakeholder 31 that prioritizes cost than other measures F, K, and L.

When the recommended measure is stored, the output unit 125 outputs the recommended measure (step S17) and ends the measure determination process. Therefore, when the recommended measure storage unit 114 stores the measures A, N, and P, the output unit 125 outputs the measures A, N, and P as recommended measures to the display device 14, as illustrated in FIG. 10(b). In more detail, the output unit 125 outputs respective measure screens 17, 18, and 19 for the measures A, N, and P to the display device 14. Each of the measure screens 17, 18, and 19 contains the initial deployment numbers and the evaluation results.

Here, in FIG. 10(b), the measure screen 17 for the measure A is displayed on the forefront of the display device 14, and the measure screen 18 for the measure N and the measure screen 19 for the measure P are displayed behind the measure screen 17. The stakeholder 11 performs an operation to designate the measure screen 18, for example, which causes the designated measure screen 18 to be displayed on the forefront of the display device 14, and the measure screens 17 and 19 to be displayed behind the measure screen 18. This allows the stakeholder 11 to compare and examine the measures A, N, and P that are highly likely to establish consensus building. The same applies to the stakeholders 21 and 31 as in the case of the stakeholder 11.

As described above, the measure determination server 100 generates the individual distribution graphs G1, G2, and G3 that represent the distribution of relative goodness for a plurality of measures A, ..., P individually evaluated by the plurality of the stakeholders 11, 21, and 31. When the individual distribution graphs G1, G2, and G3 are generated, the measure determination server 100 generates the combined distribution graph G5 obtained by combining the individual distribution graphs G1, G2, and G3. Then, based on the combined distribution graph G5, the measure determination server 100 determines the measures A, N, and P as recommended measures from among a plurality of the measures A, ..., P. The measure determination server 100 allows the stakeholders 11, 21, and 31 to select the measure that has a high convergence of consensus building.

. As a result, the stakeholders 11, 21, and 31 do not have to leave the decision of whether multiple measures are good or bad to a consultant with sufficient expertise in evaluating measures. Therefore, terminal operations for re-proposing measures by the consultant are avoided, thereby eliminating operation time and reducing the increase in processing load and power consumption of the terminal.

Although the preferred embodiments of the present invention have been described in detail, the present invention is not limited to the specific embodiments, and various modifications and changes can be made within the scope of the gist of the present invention described in the claims. For example, in the embodiment described above, the evaluation results are presented in a radar chart, but a known data display format such as a bar graph or line graph may be employed instead of a radar chart, for example.

In the embodiment described above, the person in charge of each department belonging to one business operator is described as the stakeholder 11, 21, or 31 as an example, but the stakeholders 11, 21, and 31 need not be limited to the person in charge. For example, the stakeholder 11 may be a government or a local government that prioritizes the environment, the stakeholder 21 may be a business operator that prioritizes income, and the stakeholder 31 may be a resident who wishes to avoid lost opportunities to use e-scooters. Even in the case where such corporations and natural persons are mixed, the stakeholders 11, 21, and 31 correspond to independent stakeholders whose interests conflict with each other.

The following supplemental notes are further disclosed in relation to the above description.
(Supplementary Note 1) A measure determination method implemented by a computer executing a process including: generating stakeholder-specific graphs representing a distribution of relative goodness for a plurality of measures individually evaluated by a plurality of stakeholders, generating a predetermined graph obtained by combining the stakeholder-specific graphs, and determining a recommended measure from the plurality of measures based on the predetermined graph.
(Supplementary Note 2) The measure determination method according to Supplementary Note 1, characterized in that the process of generating the predetermined graph includes assigning weights according to a power relationship of the plurality of stakeholders to the stakeholder-specific graphs, and generating the predetermined graph based on weighted stakeholder-specific graphs.
(Supplementary Note 3) The measure determination method according to Supplementary Note 1 or 2, characterized in that the process of generating the predetermined graph includes generating the predetermined graph based on multiplication of the stakeholder-specific graphs.
(Supplementary Note 4) The measure determination method according to any one of Supplementary Notes 1 to 3, characterized in that the process of determining the measure includes comparing a numerical value on the predetermined graph with a threshold value and determining a measure corresponding to a specific numerical value that is equal to or greater than the threshold value as the recommended measure.
(Supplementary Note 5) The measure determination method according to any one of Supplementary Notes 1 to 4, characterized by including: a process of acquiring the relative goodness based on an input to an input device by the plurality of stakeholders, and a process of outputting the recommended measure that has been determined to the display device.
(Supplementary Note 6) The measure determination method according to any one of Supplementary Notes 1 to 5, characterized in that the plurality of stakeholders are independent interested parties having conflicting interests with each other in a single project.
(Supplementary Note 7) A measure determination program causing a computer to execute a process including: generating stakeholder-specific graphs representing a distribution of relative goodness for a plurality of measures individually evaluated by a plurality of stakeholders, generating a predetermined graph obtained by combining the stakeholder-specific graphs, and determining a recommended measure from the plurality of measures based on the predetermined graph.
(Supplementary Note 8) A measure determination device including: a first generation unit that generates stakeholder-specific graphs representing a distribution of relative goodness for a plurality of measures individually evaluated by a plurality of stakeholders; a second generation unit that generates a predetermined graph obtained by combining the stakeholder-specific graphs; and a determination unit that determines a recommended measure from the plurality of measures based on the predetermined graph.
(Supplementary Note 9) The measure determination device according to Supplementary Note 8, characterized in that the second generation unit assigns weights according to a power relationship of the plurality of stakeholders to the stakeholder-specific graphs, and generates the predetermined graph based on weighted stakeholder-specific graphs.

### [Description of Sign].

- 10, 20, 30: Terminal device
- 11, 21, 31: Stakeholder
- ST: Measure determination system
- 100: Measure determination server
- G1, G2, G3: Individual distribution graph
- G5: Combined distribution graph

## Claims

1. A measure determination method implemented by a computer executing a process including: generating stakeholder-specific graphs representing a distribution of relative goodness for a plurality of measures individually evaluated by a plurality of stakeholders; generating a predetermined graph obtained by combining the stakeholder-specific graphs; and determining a recommended measure from the plurality of measures based on the predetermined graph.

2. The measure determination method according to claim 1, **characterized in that** the process of generating the predetermined graph includes assigning weights according to a power relationship of the plurality of stakeholders to the stakeholder-specific graphs, and generating the predetermined graph based on weighted stakeholder-specific graphs.

3. The measure determination method according to claim 1 or 2, **characterized in that** the process of generating the predetermined graph includes generating the predetermined graph based on multiplication of the stakeholder-specific graphs.

4. The measure determination method according to any one of claims 1 to 3, **characterized in that** the process of determining the measure includes comparing a numerical value on the predetermined graph with a threshold value and determining a measure corresponding to a specific numerical value that is equal to or greater than the threshold value as the recommended measure.

5. The measure determination method according to any one of claims 1 to 4, **characterized by** including: a process of acquiring the relative goodness based on an input to an input device by the plurality of stakeholders; and a process of outputting a determined recommended measure to a display device.

6. The measure determination method according to any one of claims 1 to 5, **characterized in that** the plurality of stakeholders are independent interested parties having conflicting interests with each other in a single project.

7. A measure determination program causing a computer to execute a process including: generating stakeholder-specific graphs representing a distribution of relative goodness for a plurality of measures individually evaluated by a plurality of stakeholders; generating a predetermined graph obtained by combining the stakeholder-specific graphs; and determining a recommended measure from the plurality of measures based on the predetermined graph.

8. The measure determination program according to claim 7, **characterized in that** the process of generating the predetermined graph includes assigning weights according to a power relationship of the plurality of stakeholders to the stakeholder-specific graphs, and generating the predetermined graph based on weighted stakeholder-specific graphs.

9. The measure determination program according to claim 7 or 8, **characterized in that** the process of generating the predetermined graph includes generating the predetermined graph based on multiplication of the stakeholder-specific graphs.

10. The measure determination program according to any one of claims 7 to 9, **characterized in that** the process of determining the measure includes comparing a numerical value on the predetermined graph with a threshold value and determining a measure corresponding to a specific numerical value that is equal to or greater than the threshold value as the recommended measure.

11. The measure determination program according to any one of claims 7 to 10, **characterized by** including: a process of acquiring the relative goodness based on an input to an input device by the plurality of stakeholders; and a process of outputting the recommended measure that has been determined to a display device.

12. The measure determination program according to any one of claims 7 to 11, **characterized in that** the plurality of stakeholders are independent interested parties having conflicting interests with each other in a single project.

13. A measure determination device comprising:
a first generation unit that generates stakeholder-specific graphs representing a distribution of relative goodness for a plurality of measures individually evaluated by a plurality of stakeholders; a second generation unit that generates a predetermined graph obtained by combining the stakeholder-specific graphs; and a determination unit that determines a recommended measure from the plurality of measures based on the predetermined graph.

14. The measure determination device according to claim 13, **characterized in that** the second generation unit assigns weights according to a power relationship of the plurality of stakeholders to the stakeholder-specific graphs, and generates the predetermined graph based on weighted stakeholder-specific graphs.

15. The measure determination device according to claim 13 or 14, **characterized in that** the second generation unit generates the predetermined graph based on multiplication of the stakeholder-specific graphs.

16. The measure determination device according to any one of claims 13 to 15, **characterized in that** the determination unit compares a numerical value on the predetermined graph with a threshold value and determines a measure corresponding to a specific numerical value that is greater than or equal to the threshold value as the recommended measure.

17. The measure determination device according to any one of claims 13 to 16, **characterized by** including: a process of acquiring the relative goodness based on an input to an input device by the plurality of stakeholders, and a process of outputting a determined recommended measure to a display device.

18. The measure determination device according to any one of claims 13 to 17, **characterized in that** the plurality of stakeholders are independent interested parties having conflicting interests with each other in a single project.
